# EUROPÄISCHE PATENTSCHRIFT

(11) **EP 2 523 837 B1**
(45) Veröffentlichungstag und Bekanntmachung des Hinweises auf die Patenterteilung: **22.06.2016**
(21) Anmeldenummer: 10787102.2
(22) Anmeldetag: 02.12.2010
(51) Int. Cl.: B60T 8/17, B60T 8/172

(54) **VERFAHREN ZUR ANKUPPLUNGSKONTROLLE EINES MIT EINEM ZUGFAHRZEUG KUPPELBAREN ANHÄNGERS SOWIE ENTSPRECHENDE ELEKTRONISCHE GERÄTEEINHEIT**
METHOD FOR CONTROLLING THE COUPLING OF A TRAILER THAT CAN BE COUPLED TO A TRACTIVE UNIT AND CORRESPONDING ELECTRONIC DEVICE UNIT
PROCÉDÉ POUR LE CONTRÔLE DE COUPLAGE D'UNE REMORQUE POUVANT ÊTRE COUPLÉE AVEC UN VÉHICULE TRACTEUR ET UNITÉ D'APPAREIL ÉLECTRONIQUE CORRESPONDANTE

(30) Priorität: 12.01.2010 DE 102010000825
(43) Veröffentlichungstag der Anmeldung: 21.11.2012
(73) Patentinhaber: Robert Bosch GmbH, 70442 Stuttgart (DE)
(72) Erfinder: SCHMIDT, Oliver, 85051 Ingolstadt (DE); HUEMMER, Armin, 71634 Ludwigsburg (DE)
(86) Internationale Anmeldenummer: PCT/EP2010/068695
(87) Internationale Veröffentlichungsnummer: WO 2011/085865

(56) Entgegenhaltungen:
- EP-A1- 2 045 155
- WO-A1-02/06101
- WO-A1-2007/060135

## Beschreibung

Die Erfindung betrifft ein Verfahren zur Ankupplungskontrolle mindestens eines mit einem Zugfahrzeug kuppelbaren Anhängers, wobei das Zugfahrzeug eine Lenkung, mit der ein Lenkwinkel einstellbar ist, besitzt. Die Erfindung betrifft weiterhin eine elektronische Geräteeinheit für ein Zugfahrzeug.

### Stand der Technik

DE 199 64 048 beschreibt ein Verfahren zum Stabilisieren eines Straßenfahrzeuges, insbesondere eines Personenkraftwagens, mit einem durch das Straßenfahrzeug gezogenen Anhänger, wobei das Straßenfahrzeug in Bezug auf Schlingerbewegungen überwacht wird und bei einem Auftreten von Schlingerbewegungen automatisch ein Giermomentenverlauf eingeprägt wird, der der Schlingerbewegung im Wesentlichen gegenphasig ist. Zur Erkennung dieser Schlingerbewegung werden von einem Lenkwinkelsensor, einem Giergeschwindigkeitssensor, einem Querbeschleunigungssensor und einem Geschwindigkeitssensor übermittelte Signale ausgewertet. Wird bei Durchführung dieses Verfahrens die Schlingerbewegung erkannt, so wird kurzzeitig ein unabhängig voneinander erfolgendes, automatisches Abbremsen und/oder Beschleunigen der einzelnen Räder des Straßenfahrzeugs derart durchgeführt, dass ein Giermomentenverlauf erzeugt wird, der gegenphasig zur Schlingerbewegung ist.

Jedoch kann es auch zu Brems- beziehungsweise Beschleunigungseingriffen während des normalen Fahrtbetriebes kommen, ohne dass eine anhängererregte Schlingerbewegung vorliegt, wenn aufgrund von verschiedenen äußeren Einflüssen (Bodenunebenheiten, böiger Seitenwind, etc.) eine der anhängererregten Schlingerbewegung ähnliche Schwingung vorliegt.

Ein Verfahren zur Ankupplungskontrolle eines mit einem Zugfahrzeug kuppelbaren Anhängers ist aus der EP 2 045 155 A1 benannt.

### Offenbarung der Erfindung

Zur Erhöhung der Erkennungsgenauigkeit des in DE 199 64 048 beschriebenen Verfahrens soll nun in der vorliegenden Erfindung ein Verfahren bereitgestellt werden, das das Vorhandensein eines an ein Zugfahrzeug angekuppelten Anhängers ermittelt. Dazu wird ein Verfahren zur Ankupplungskontrolle mindestens eines mit einem Zugfahrzeug kuppelbaren Anhängers mit den Merkmalen gemäß Anspruch 1 bereitgestellt. Das Verfahren weist dabei folgende Schritte auf: (a) Erfassen von Gierschwingungen des Zugfahrzeuges über eine bestimmte Zeitspanne, insbesondere von 1 Sekunde bis 3 Sekunden, bei einem nahezu konstanten oder konstanten Lenkwinkel und oberhalb einer vorgebbaren Geschwindigkeit des Zugfahrzeugs ohne Bremseingriff und (b) Auswerten der erfassten Gierschwingungen daraufhin, ob die Amplituden der Gierschwingungen einen vorgebbaren Amplituden-Schwellenwert nicht unterschreiten. Bei dem erfindungsgemäßen Verfahren zur Ankupplungskontrolle wird die Anwesenheit des Anhängers an dem Zugfahrzeug überprüft. Dabei wird nicht analysiert, ob der Anhänger korrekt mit dem Zugfahrzeug gekuppelt ist, sondern nur, ob die Kupplung zwischen dem Zugfahrzeug und dem Anhänger vorliegt. Unter dem nahezu konstanten oder konstanten Lenkwinkel ist dabei ein Lenkwinkel zu verstehen, der sich geringfügig bzw. in kleinen Grenzen ändern kann, bevorzugt wird dabei der vorgebbare Amplituden-Schwellenwert nicht überschritten. In einer bevorzugten Ausführungsform werden die Gierschwingungen über eine bestimmte Zeitspanne von 1,5 bis 3 Sekunden, bevorzugt 2 bis 3 Sekunden, bevorzugt etwa 2 Sekunden und insbesondere genau 2 Sekunden erfasst. Das erfindungsgemäße Verfahren sieht vor, dass kein Bremseingriff innerhalb der Zeitspanne erfolgt. Der Begriff "Bremseingriff" schließt einen Bremseingriff des Fahrers und/oder einen von der Steuerungselektronik hervorgerufenen Bremsvorgang ein. In bevorzugter Weise erfolgt auch kein Beschleunigen des Zugfahrzeuges, das durch den Fahrer und/oder der Steuerungselektronik hervorgerufen wird. Bevorzugt wird das Verfahren bei konstanter oder nahezu konstanter Geschwindigkeit durchgeführt. Alternativ werden nicht die Amplituden der Gierschwingungen, sondern die Amplituden der Gierraten erfasst und entsprechend ausgewertet. Die Gierraten beziehungsweise die Gierschwingungen haben identische Amplituden und können deshalb gegeneinander ausgetauscht werden. Allein die Phase ihrer Amplituden ist zeitlich versetzt. Liegen bei den Gierschwingungen Maxima und Minima vor, so haben die Gierraten dort Null-Durchgänge und umgekehrt. Somit ist unter dem Amplituden-Schwellenwert nicht nur der Schwellenwert der Gierschwingungen, sondern auch der der Gierraten zu verstehen. Bevorzugt werden die Gierraten des Zugfahrzeuges erfasst und aus diesen die Gierschwingungen bestimmt. Insbesondere werden die Gierschwingungen bei einem nahezu konstanten oder konstanten Lenkwinkel, der ungleich Null ist, dass heißt während einer Kurvenfahrt, erfasst.

Eine Weiterbildung der Erfindung sieht vor, dass der Lenkwinkel gleich Null oder etwa gleich Null eingestellt wird. Das Verfahren zur Ankupplungskontrolle wird in diesem Fall erst gestartet, wenn sich das Zugfahrzeug in Geradeausfahrt befindet. Die dabei auftretenden Lenkwinkel, können sich geringfügig bzw. in kleinen Grenzen ändern. Bevorzugt wird dabei der vorgebbare Amplituden-Schwellenwert nicht überschritten.

Eine Weiterbildung der Erfindung sieht vor, dass mittels einer vorgebbaren Lenkwinkeländerung und/oder Lenkwinkeländerung pro Zeiteinheit, insbesondere von weniger als 0,02 rad/s, das Verfahren zur Ankupplungskontrolle ausgelöst wird. Alternativ oder zusätzlich kann das Verfahren zur Ankupplungskontrolle durch Seitenwind und/oder durch andere äußere Einflüsse ausgelöst werden, wenn dieser eine Gierrate, die insbesondere kleiner als 0,02 rad/s ist, erzeugt. Auf diese Weise wird das Auswerten der Gierschwingungen erst gestartet, wenn eine durch eine Steuerungselektronik und/oder durch Seitenwind hervorgerufene Lenkwinkeländerung und/oder Lenkwinkeländerung pro Zeiteinheit vorliegt und dadurch Gierschwingungen induziert werden. Erst bei einer hervorgerufenen Lenkwinkeländerung von weniger als 0,02 rad/s, bevorzugt von 0,01 bis 0,02 rad/s, insbesondere von 0,015 bis 0,02 rad/s, werden die Gierschwingungen erfasst und die erfassten Gierschwingungen daraufhin ausgewertet, ob eine anhängererregte Gierschwingung vorliegt, sodass erkannt werden kann, ob ein Anhänger an einem Zugfahrzeug hängt.

Eine Weiterbildung der Erfindung sieht vor, dass die Geschwindigkeit des Zugfahrzeugs oberhalb von 15 m/s gewählt wird. Die Wahrscheinlichkeit, dass anhängererregte Gierschwingungen oder Gierraten auftreten, nimmt mit zunehmender Geschwindigkeit zu. So werden bis zu einer Geschwindigkeit von 25 m/s die anhängereregten Gierschwingungen bzw.Gierraten gedämpft. Bei höheren Geschwindigkeiten nehmen die Amplituden zeitlich gesehen zu ("Aufschaukeln"). In einer bevorzugten Ausführungsform ist es daher vorgesehen, erst ab einer Geschwindigkeit oberhalb von 15 m/s, insbesondere 20 m/s, insbesondere oberhalb von 25 m/s, die Gierschwingungen und/oder Gierraten zu erfassen und somit das Auswerten derselben durchzuführen.

Eine Weiterbildung der Erfindung sieht vor, dass die Gierschwingungen daraufhin ausgewertet werden, ob ihre Frequenz nahezu konstant oder konstant ist. Eine anhängererregte Gierschwingung zeichnet sich dadurch aus, dass sie eine sich über eine Zeitspanne, insbesondere von 1 Sekunde bis 3 Sekunden, nur in geringem Maß ändernde Frequenz besitzt. Die Frequenz der Gierschwingungen und/oder der Gierraten kann sich geringfügig erhöhen und/oder erniedrigen, insbesondere konstant bleiben. Liegen nahezu konstante oder konstante Gierschwingungen bzw. Gierraten vor, so ist die Ankupplungskontrolle positiv und ein Anhänger ist an das Zugfahrzeug gekuppelt.

In bevorzugter Ausführungsform werden die Gierschwingungen erfasst und anschließend daraufhin ausgewertet, ob ihre Frequenz in einem Bereich von 0,5 bis 2,0 Hz, bevorzugt von 0,5 bis 1,5 Hz und besonders bevorzugt von 1,0 bis 1,5 Hz ist. Wird eine derartige Frequenz erfasst, so erkennt das Verfahren auf anhängererregte Gierschwingungen und somit auf eine Kupplung von dem Anhänger mit dem Zugfahrzeug.

Eine Weiterbildung der Erfindung sieht vor, dass die Gierschwingungen daraufhin ausgewertet werden, ob ihre Amplitude nahezu konstant oder konstant ist. Anhängererregte Gierschwingungen zeichnen sich dadurch aus, dass sie eine sich nur geringfügig ändernde Amplitude besitzen. Bei vorliegender nahezu konstanter oder konstanter Amplitude der Gierschwingungen erkennt das Verfahren zur Ankupplungskontrolle, dass der Anhänger an das Zugfahrzeug gekuppelt ist. In bevorzugter Ausführungsform werden die Gierschwingungen daraufhin ausgewertet, ob ihre Amplitude einen Wert von 0,01 bis 0,06 rad/s, bevorzugt 0,01 bis 0,04 rad/s, bevorzugt 0,01 bis 0,03 rad/s und besonders bevorzugt 0,01 bis 0,02 rad/s hat.

In einer bevorzugten Ausführungsform werden auch Amplituden der Gierschwingungen beziehungsweise der Gierraten in der bestimmten Zeitspanne, insbesondere von 1 Sekunde bis 3 Sekunden, ausgewertet, die aufgrund einer gedämpften Übertragung sich geringfügig verringern oder sich durch das Aufschaukeln des Gespanns geringfügig erhöhen.

In einer bevorzugten Ausführungsform werden die Gierschwingungen beziehungsweise die Gierraten daraufhin ausgewertet, ob sie neben Maxima und Minima zusätzlich einen Nulldurchgang haben. Lediglich bei Vorhandensein eines Nulldurchgangs der Gierschwingungen bzw. der Gierraten wird mittels des Verfahrens zur Ankupplungskontrolle erkannt, dass ein Anhänger an das Zugfahrzeug gekuppelt ist.

Eine Weiterbildung der Erfindung sieht vor, dass der Amplituden-Schwellenwert in einer Größe von etwa 0,01 rad/s, insbesondere genau 0,01 rad/s gewählt wird. Der Amplituden-Schwellenwert wird so gewählt, dass das Verfahren trotz geringfügiger Störgrößen (Bodenunebenheiten, Seitenwind, etc.) auf anhängererregte Gierschwingungen und/oder Gierraten erkennen kann, so dass Fehlinterpretationen, ob eine Kupplung zwischen dem Anhänger und dem Zugfahrzeug vorliegt, minimiert werden.

Das erfindungsgemäße Computerprogramm sieht vor, dass alle Schritte des erfindungsgemäßen Verfahrens durchgeführt werden, wenn es auf einem Computer abläuft.

Das erfindungsgemäße Computerprogrammprodukt mit einem auf einem maschinenlesbaren Träger gespeicherten Programmcode führt das erfindungsgemäße Verfahren aus, während das Programm auf einem Computer abläuft.

Eine Weiterbildung der Erfindung sieht eine elektronische Geräteeinheit für ein Zugfahrzeug vor, wobei das Zugfahrzeug eine Lenkung, mit der ein Lenkwinkel einstellbar ist, besitzt und wobei die Geräteinheit mindestens einen Gierschwingungserfassungssensor, einen Lenkwinkelsensor und ein an die Sensoren angeschlossenes elektronisches Steuergerät aufweist, das eine Einrichtung zur Kupplungskontrolle mindestens eines mit dem Zugfahrzeug kuppelbaren Anhängers besitzt. Dabei ist vorgesehen, dass die Einrichtung eine die Amplituden von Gierschwingungen des Zugfahrzeuges über eine bestimmte Zeitspanne, insbesondere von 1 Sekunde bis 3 Sekunden, bei einem nahezu konstanten oder konstanten Lenkwinkel und oberhalb einer vorgebbaren Geschwindigkeit ohne Bremseingriff auf Unterschreiten eines vorgebbaren Amplituden-Schwellwerts analysierende Auswerteeinheit aufweist. Selbstverständlicherweise ist die elektronische Geräteeinheit in der Lage, die Geschwindigkeit des Zugfahrzeuges zu messen und ein Betätigen der Bremse zu registrieren.

Mit der elektronischen Geräteeinheit ist es einem elektronischen Steuerungssystem des Zugfahrzeuges möglich, selbsttätig eine Ankupplungskontrolle mindestens eines mit dem Zugfahrzeug kuppelbaren Anhängers durchzuführen, um anschließend erst bei sichergestellter Anwesenheit des Anhängers, Stabilisierungsmaßnahmen des Zugfahrzeuges gegen anhängereregte Gierschwingungen zu ergreifen.

Des Weiteren ist bevorzugt vorgesehen, dass die von dem Gierschwingungserfassungssensor und dem Lenkwinkelsensor erhaltenen Signale zunächst aufbereitet werden. Diese Signalaufbereitung kann bevorzugt eine Vorverstärkung, eine Offset-Korrektur und/oder eine Kalibrierung aufweisen.

Die Erfindung wird im Folgenden anhand des in der Zeichnung dargestellten Ausführungsbeispiels näher erläutert, ohne dass eine Beschränkung der Erfindung erfolgt.

Ausführungsbeispiele der Erfindung sind in der Zeichnung dargestellt und in der nachfolgenden Beschreibung näher erläutert.
Figur 1 zeigt eine elektronische Geräteeinheit für ein Zugfahrzeug.
Figur 2 zeigt ein Diagramm, bei dem die Fahrzeug-Soll-Gierrate ψₛ (rad/s) beziehungsweise die Fahrzeug-Ist-Gierrate ψₗ (rad/s) über der Zeit t (s) aufgetragen ist.

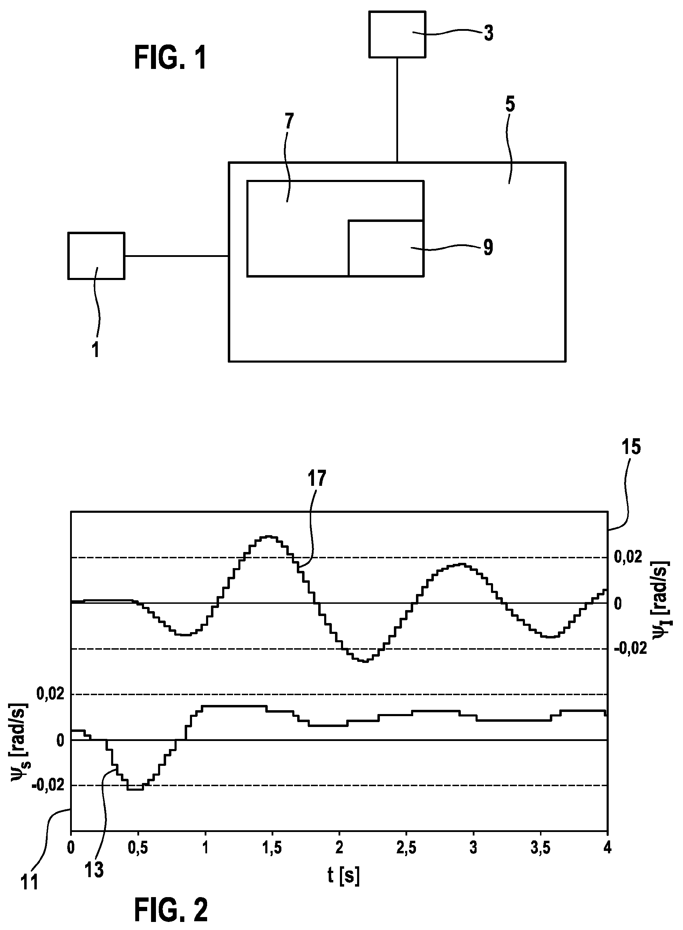

Die Figur 1 zeigt eine elektronische Geräteeinheit für ein Zugfahrzeug, bei der ein Lenkwinkelsensor 1, der mit der Lenkung eines Zugfahrzeuges verbunden ist und den Lenkwinkel des Zugfahrzeuges erfasst, und ein Gierschwingungserfassungssensor 3 über elektrische Leitungen an ein elektronisches Steuergerät 5 angeschlossen sind. Das elektronische Steuergerät 5 weist eine Einrichtung zur Ankupplungskontrolle 7 auf, die eine Auswerte-Einheit 9 umfasst.

Bei einer vorgebbaren Geschwindigkeit des Zugfahrzeuges und ohne Bremseingriff werden der Lenkwinkel des Zugfahrzeuges mittels des Lenkwinkelsensor 1 und die Gierschwingungen des Zugfahrzeuges mittels des Gierschingungserfassungssensors 3 erfasst und über die elektrischen Leitungen an das elektronische Steuergerät 5 weiter gegeben. In der Auswerte-Einheit 9 werden anschließend die Gierschwingungen daraufhin ausgewertet, ob ihre Amplitude einen gewissen Schwellenwert in einer bestimmten Zeitspanne, insbesondere von 1 Sekunde bis 3 Sekunden, nicht unterschreitet. Ist dies der Fall, erkennt die Einrichtung zur Ankupplungskontrolle 7 auf einen gekuppelten Anhänger, und stellt diese Informationen beispielsweise dem Steuergerät zur Verfügung.

Die Figur 2 zeigt ein Diagramm, in welchem die Fahrzeug-Soll-Gierrate ψₛ (Achse 11 und Kurve 13) und die Fahrzeug-Ist-Gierrate ψₗ (Achse 15 und Kurve 17) über der Zeit t aufgetragen sind. Bei t = 0 s befindet sich ein hier nicht dargestelltes Fahrzeug in einem Zustand, bei dem der Lenkwinkel oberhalb einer vorgebbaren Geschwindigkeit des Zugfahrzeugs ohne Bremseingriff nahezu konstant oder konstant gehalten wird.

Nach einem Auftreten einer lenkraderregten Fahrzeug-Soll-Gierrate ψₛ von ca. -0,02 rad/s zu dem Zeitpunkt t = 0,5 s klingt die Fahrzeug-Soll-Gierrate ψₛ wieder ab und ist ab dem Zeitpunkt von t = 1 s bei einem Wert von ca. 0,01 rad/s nahezu konstant. Bei dieser lenkraderregten Fahrzeug-Soll-Gierrate ψₛ zu dem (rein bespielhaften) Zeitpunkt t = 0,5 s kann bevorzugt eine Fahrzeug-Ist-Gierrate ψₗ (Kurve 3) ungleich Null auftreten, die erfasst und ausgewertet wird.

Die Fahrzeug-Ist-Gierrate ψₗ zeichnet sich in dem Diagramm durch eine nahezu konstante Frequenz von ungefähr 1,5 Hz und eine nahezu konstante Amplitude von größer als 0,03 rad/s aus. In diesem Fall kann beispielsweise ein Schwellenwert von 0,015 rad/s gewählt werden.

Aufgrund der vorliegenden Fahrzeug-Ist-Gierrate ψₗ (Kurve 3) kann mittels des erfindungsgemäßen Verfahrens auf die Anwesenheit eines mit dem Zugfahrzeug gekuppelten Anhängers geschlossen werden. So kann vermieden werden, dass ein Steuergerät des Zugfahrzeuges Maßnahmen zur Stabilisierung ergreift, die notwendig sind, wenn eine anhängereregte Gierschwingung vorliegt.

## Patentansprüche

1. Verfahren zur Ankupplungskontrolle mindestens eines mit einem Zugfahrzeug kuppelbaren Anhängers, wobei das Zugfahrzeug eine Lenkung, mit der ein Lenkwinkel einstellbar ist, besitzt, **gekennzeichnet durch** folgende Schritte:
a. Erfassen von Gierschwingungen des Zugfahrzeugs über eine bestimmte Zeitspanne, insbesondere von 1 Sekunde bis 3 Sekunden, bei einem nahezu konstanten oder konstanten Lenkwinkel und oberhalb einer vorgebbaren Geschwindigkeit des Zugfahrzeugs ohne Bremseingriff und
b. Auswerten der erfassten Gierschwingungen daraufhin, ob die Amplituden der Gierschwingungen einen vorgebbaren Amplituden-Schwellenwert nicht unterschreiten.

2. Verfahren nach Anspruch 1, **dadurch gekennzeichnet, dass** der Lenkwinkel gleich Null oder etwa gleich Null eingestellt wird.

3. Verfahren nach einem der vorhergehenden Ansprüche, **dadurch gekennzeichnet, dass** mittels einer vorgebbaren Lenkwinkeländerung und/oder Lenkwinkeländerung pro Zeiteinheit, insbesondere von weniger als 0,02 rad/s, die Ankupplungskontrolle ausgelöst wird.

4. Verfahren nach einem der vorhergehenden Ansprüche, **dadurch gekennzeichnet, dass** die Geschwindigkeit oberhalb von 15 m/s gewählt wird.

5. Verfahren nach einem der vorhergehenden Ansprüche, **dadurch gekennzeichnet, dass** die Gierschwingungen daraufhin ausgewertet werden, ob ihre Frequenz nahezu konstant oder konstant ist.

6. Verfahren nach einem der vorhergehenden Ansprüche, **dadurch gekennzeichnet, dass** die Gierschwingungen daraufhin ausgewertet werden, ob ihre Amplitude nahezu konstant oder konstant ist.

7. Verfahren nach einem der vorhergehenden Ansprüche, **dadurch gekennzeichnet, dass** der Amplituden-Schwellenwert mit einer Größe von etwa 0,01 rad/s ausgewählt wird.

8. Computerprogramm, das alle Schritte eines Verfahrens nach mindestens einem der Ansprüche 1 bis 7 ausführt, wenn das Programm auf einem Computer läuft.

9. Computer-Programmprodukt mit einem auf einem maschinen-lesbaren Träger gespeicherten Programmcode zur Durchführung des Verfahrens nach mindestens einem der Ansprüche 1 bis 7, wenn das Programm auf einem Computer ausgeführt wird.

10. Elektronische Geräteeinheit für ein Zugfahrzeug, wobei das Zugfahrzeug eine Lenkung, mit der ein Lenkwinkel einstellbar ist, besitzt und wobei die Geräteeinheit mindestens einen Gierschwingungserfassungssensor (3), einen Lenkwinkelsensor (1) und ein an die Sensoren angeschlossenes elektronisches Steuergerät (5) aufweist, das eine Einrichtung zur Ankupplungskontrolle (7) mindestens eines mit dem Zugfahrzeug kuppelbaren Anhängers besitzt, insbesondere nach dem Verfahren nach einem oder mehreren der vorherigen Ansprüche, **dadurch gekennzeichnet, dass** die Einrichtung eine die Amplituden von Gierschwingungen des Zugfahrzeugs über eine bestimmte Zeitspanne, insbesondere von 1 Sekunde bis 3 Sekunden, bei einem nahezu konstanten oder konstanten Lenkwinkel und oberhalb einer vorgebbaren Geschwindigkeit ohne Bremseingriff auf Unterschreiten eines vorgebbaren Amplituden-Schwellwerts analysierende Auswerte-Einheit (9) aufweist.

## Claims

1. Method for controlling the coupling of at least one trailer which can be coupled to a tractive unit, wherein the tractive unit has a steering system with which a steering angle can be set, **characterized by** the following steps:
a. detecting yawing oscillations of the tractive unit over a specific time period, in particular of 1 second to 3 seconds at a virtually constant or constant steering angle and above a predefinable speed of the tractive unit without braking intervention, and
b. evaluating the detected yawing oscillations as to whether the amplitudes of the yawing oscillations undershoot a predefinable amplitude threshold value or not.

2. Method according to Claim 1, **characterized in that** the steering angle is set to be equal to zero or approximately equal to zero.

3. Method according to one of the preceding claims, **characterized in that** the coupling control is triggered by means of a predefinable change in the steering angle and/or a change in the steering angle per unit time, in particular of less than 0.02 rad/s.

4. Method according to one of the preceding claims, **characterized in that** the speed is selected to be above 15 m/s.

5. Method according to one of the preceding claims, **characterized in that** the yawing oscillations are evaluated to determine whether their frequency is virtually constant or is constant.

6. Method according to one of the preceding claims, **characterized in that** the yawing oscillations are evaluated to determine whether their amplitude is virtually constant or is constant.

7. Method according to one of the preceding claims, **characterized in that** the amplitude threshold value is selected with a magnitude of approximately 0.01 rad/s.

8. Computer program which executes all the steps of a method according to at least one of Claims 1 to 7 when the program runs on a computer.

9. Computer program product having a program code which is stored on a machine-readable carrier, for carrying out the method according to at least one of Claims 1 to 7 when the program is executed on a computer.

10. Electronic device unit for a tractive unit, wherein the tractive unit has a steering system with which a steering angle can be set, and wherein the device unit has at least one yawing oscillation-detecting sensor (3), a steering angle sensor (1) and an electronic control unit (5) which is connected to the sensors and has a device for controlling (7) the coupling of at least one trailer which can be coupled to the tractive unit, in particular according to the method according to one or more of the preceding claims, **characterized in that** the device has an evaluation unit (9) which analyzes the amplitudes of the yawing oscillations of the tractive unit with respect to the undershooting of a predefinable amplitude threshold value, over a specific time period, in particular of 1 second to 3 seconds at a virtually constant or constant steering angle and above a predefinable speed without braking intervention.

## Revendications

1. Procédé pour le contrôle du couplage d'au moins une remorque pouvant être couplée à un véhicule tracteur, dans lequel le véhicule tracteur comporte un système de direction au moyen duquel un angle de braquage peut être réglé, **caractérisé par** les étapes consistant à :
a. détecter des vibrations transversales du véhicule tracteur au cours d'un intervalle de temps déterminé, notamment de 1 seconde à 3 secondes, pour un angle de braquage sensiblement constant ou constant et au-dessus d'une vitesse pouvant être prédéfinie du véhicule tracteur, sans actionnement des freins et
b. évaluer les vibrations transversales détectées pour déterminer si les amplitudes des vibrations transversales ne s'abaissent pas en-dessous d'une valeur de seuil d'amplitude pouvant être prédéfinie.

2. Procédé selon la revendication 1, **caractérisé en ce que** l'angle de braquage est réglé à une valeur nulle ou à une valeur pratiquement nulle.

3. Procédé selon l'une quelconque des revendications précédentes, **caractérisé en ce que** le contrôle du couplage est déclenché au moyen d'une modification pouvant être prédéfinie de l'angle de braquage et/ou d'une modification de l'angle de braquage par unité de temps, notamment inférieure à 0,02 rad/s.

4. Procédé selon l'une quelconque des revendications précédentes, **caractérisé en ce que** la vitesse est sélectionnée à une valeur supérieure à 15 m/s.

5. Procédé selon l'une quelconque des revendications précédentes, **caractérisé en ce que** les vibrations transversales sont évaluées pour déterminer si leur fréquence est sensiblement constante ou est constante.

6. Procédé selon l'une quelconque des revendications précédentes, **caractérisé en ce que** les vibrations transversales sont évaluées pour déterminer si leur amplitude est sensiblement constante ou est constante.

7. Procédé selon l'une quelconque des revendications précédentes, **caractérisé en ce que** la valeur de seuil d'amplitude est sélectionnée à une valeur d'environ 0,01 rad/s.

8. Programme d'ordinateur mettant en oeuvre les étapes d'un procédé selon au moins l'une des revendications 1 à 7 lorsque le programme est exécuté sur un ordinateur.

9. Produit de programme d'ordinateur comportant un code de programme stocké sur un support lisible par machine pour mettre en oeuvre le procédé selon au moins l'une des revendications 1 à 7 lorsque le programme est exécuté sur un ordinateur.

10. Unité d'appareil électronique destinée à un véhicule tracteur, dans laquelle le véhicule tracteur comporte un système de direction au moyen duquel un angle de braquage peut être réglé et dans laquelle l'unité d'appareil électronique comprend au moins un capteur de détection de vibration transversale (3), un capteur d'angle de braquage (1) et un appareil de commande électronique (5) raccordé aux capteurs, qui comporte un dispositif pour le contrôle de couplage (7) d'au moins une remorque pouvant être couplée au véhicule tracteur, notamment conformément au procédé selon l'une ou plusieurs des revendications précédentes, **caractérisé en ce que** le dispositif comprend une unité d'évaluation (9) analysant les amplitudes de vibrations transversales du véhicule tracteur au cours d'un intervalle de temps déterminé, notamment de 1 seconde à 3 secondes, pour un angle de braquage sensiblement constant ou constant et au-dessus d'une vitesse pouvant être prédéfinie, sans actionnement des freins, lors d'un abaissement en-dessous d'une valeur de seuil d'amplitude pouvant être prédéfinie.
